(19) Europäisches Patentamt / European Patent Office / Office européen des brevets

(11) **EP 4 067 470 A1**

(12) **EUROPEAN PATENT APPLICATION**
published in accordance with Art. 153(4) EPC

(43) Date of publication:
**05.10.2022  Bulletin 2022/40**

(21) Application number: **20893263.2**

(22) Date of filing: **24.11.2020**

(51) International Patent Classification (IPC):
*C11D 17/08* (2006.01)  *D06F 35/00* (2006.01)
*C11D 1/14* (2006.01)  *C11D 1/68* (2006.01)
*C11D 1/74* (2006.01)  *C11D 1/83* (2006.01)
*C11D 3/20* (2006.01)  *C11D 3/48* (2006.01)
*D06L 1/12* (2006.01)

(52) Cooperative Patent Classification (CPC):
**C11D 1/14; C11D 1/74; C11D 1/83; C11D 3/20;
C11D 3/2003; C11D 3/48; C11D 17/08;
D06F 35/00; D06L 1/12**

(86) International application number:
**PCT/JP2020/043613**

(87) International publication number:
**WO 2021/106851 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.11.2019  JP 2019212466**

(71) Applicant: **Kao Corporation
Chuo-ku
Tokyo 103-8210 (JP)**

(72) Inventors:
• **NAKATANI Shinichiro
  Wakayama-shi, Wakayama 640-8580 (JP)**
• **KIJITORI Hiroki
  Wakayama-shi, Wakayama 640-8580 (JP)**
• **IZAWA Yoshifumi
  Wakayama-shi, Wakayama 640-8580 (JP)**

(74) Representative: **Hoffmann Eitle
Patent- und Rechtsanwälte PartmbB
Arabellastraße 30
81925 München (DE)**

(54) **LIQUID DETERGENT COMPOSITION FOR TEXTILE PRODUCTS**

(57)    The present invention is a liquid detergent composition for textile products containing (a) a surfactant, (b) an alcohol with 10 or more and 16 or less carbons and (c) an antibacterial compound having an aromatic ring (excluding quaternary ammonium salts).

EP 4 067 470 A1

**Description**

Field of the Invention

The present invention relates to a liquid detergent composition for textile products and a method for washing a textile product.

Background of the Invention

In powder detergent compositions for clothing or other textile products, anionic or nonionic surfactants are used as washing components. As anionic surfactants, those having a sulfonic acid group or a salt thereof, typically, alkylbenzene sulfonate salts, and those having a sulfate salt, typically, alkyl sulfate salts and polyoxyalkylene alkyl sulfate salts are known. From the viewpoint of detergency against various stains adhering to clothing, suppliers of laundry detergents use a plurality of anionic surfactants together.

On the other hand, consumers have become more concerned about smells or bacteria on their clothing as they have become more hygiene-conscious. It is known that skin microbiota or various bacteria existing in the environment adhere to clothing and propagate themselves thereon. It is known that quaternary ammonium surfactants are used as a means for suppressing the growth of bacteria adhering to clothing. Further, chlorine-containing aromatic compounds such as diclosan or the like are also known as antibacterial or bactericidal compounds.

JP-A 2009-263812 discloses a method for suppressing a sour laundry smell, wherein a textile product with a water content (proportion of water with which the textile product is impregnated to the total dry mass of the textile product) after the completion of dewatering in laundry processes of 30 to 120 mass% is brought into contact with an aqueous composition comprising (a) at least one antibacterial agent selected from a cationic organic antibacterial agent, triclosan and diclosan, (b) at least one surfactant selected from a nonionic surfactant and an amine oxide surfactant, and water, wherein the content of (a) is 0.05 to 10 mass% and the content of (b) is 0.01 to 10 mass%.

JP-A 2004-204085 discloses a detergent composition comprising a surface-coated particle obtained by coating a granulated particle comprising a clay mineral carrying at least one selected from the group consisting of an antibacterial substance, an antioxidation substance and a deodorant substance with a surface coating agent.

JP-A 2011-190368 discloses a liquid detergent composition for clothing comprising copolymer (A), which is a copolymer obtained from the four vinyl monomers of vinyl monomer m1 having a tertiary amine structure as a side chain, vinyl monomer m2 having a lactam structure, vinyl monomer m3 having a linear or branched carbon chain, an alicyclic hydrocarbon or an aromatic hydrocarbon group with 1 to 30 carbons as a side chain and vinyl monomer m4 having a polyalkylene oxide group with 2 to 4 carbons as a side chain such that the constituting amounts of the four monomers fall respectively within the ranges of (m1) 10 to 70 mol%, (m2) 10 to 70 mol%, (m3) 1 to 30 mol% and (m4) 1 to 60 mol% and make the total amount 100 mol%, functional component (B) having at least one effect of a bactericidal/antibacterial effect, a deodorant effect and an antioxidation effect, and surfactant (C).

Summary of the Invention

The present invention provides a liquid detergent composition for textile products with excellent detergency and good foamability capable of imparting excellent antibacterial properties to textile products even if used in laundry processes or the like including washing and rinsing and a method for washing a textile product.

The present invention relates to a liquid detergent composition for textile products containing (a) a surfactant [hereinafter referred to as component (a)], (b) an alcohol with 10 or more and 16 or less carbons [hereinafter referred to as component (b)] and (c) an antibacterial compound having an aromatic ring [hereinafter referred to as component (c)].

Further, the present invention relates to a method for washing a textile product including, washing the textile product with a detergent liquid obtained by mixing the liquid detergent composition for textile products of the present invention and water, and thereafter rinsing the textile product with water.

According to the present invention, provided are a liquid detergent composition for textile products with excellent detergency and good foamability capable of imparting excellent antibacterial properties to textile products even if used in laundry processes or the like including washing and rinsing and a method for washing a textile product.

Embodiments of the Invention

[Liquid detergent composition for textile products]

The liquid detergent composition for textile products of the present invention contains a surfactant of component (a).

Examples of component (a) include one or more surfactants selected from (a1) an anionic surfactant [hereinafter referred to as component (a1)] and (a2) a nonionic surfactant [hereinafter referred to as component (a2)].

Examples of component (a1) include one or more anionic surfactants selected from an internal olefin sulfonate salt with 10 or more and 18 or less carbons, a sulfate salt having an alkyl group or alkenyl group with 10 or more and 24 or less carbons, a polyoxyalkylene alkyl or alkenyl ether sulfate salt having an alkyl group or alkenyl group with 10 or more and 24 or less carbons, and a sulfonate salt having an alkyl group or alkenyl group with 10 or more and 24 or less carbons (provided that the internal olefin sulfonate salt with 10 or more and 18 or less carbons is excluded).

The internal olefin sulfonate salt with 10 or more and 18 or less carbons can be obtained by sulfonating an internal olefin with 10 or more and 18 or less carbons. The internal olefin refers to an olefin with a double bond present at position 2 or higher. The internal olefin can be obtained, for example, by isomerizing a 1-olefin obtained by dehydrating a 1-alcohol. If the internal olefin is sulfonated, β-sultones are quantitatively produced, and part of the β-sultones changes into γ-sultones and olefin sulfonic acids, which further convert into a hydroxy alkane sulfonate salt and an olefin sulfonate salt in a neutralization/hydrolysis process (e.g., J. Am. Oil Chem. Soc. 69, 39 (1992)). Here, the resultant hydroxy alkane sulfonate salt has a hydroxy group inside the alkane chain, and the olefin sulfonate salt has a double bond inside the olefin chain. Further, the resultant product is a mixture mainly composed thereof and may partially include a hydroxy alkane sulfonate salt having a hydroxy group at the end of the carbon chain or an α-olefin sulfonate salt having a double bond at the end of the carbon chain in trace amounts. Each of these products and mixtures thereof are collectively called an internal olefin sulfonate salt herein. Further, the hydroxy alkane sulfonate salt and the olefin sulfonate salt are referred to as hydroxy species of the internal olefin sulfonate salt (hereinafter also referred to as HAS) and olefin species of the internal olefin sulfonate salt (hereinafter also referred to as IOS), respectively.

The internal olefin sulfonate salt has 10 or more and preferably 14 or more, and 18 or less carbons. An internal olefin sulfonate salt with 16 carbons is preferable from the viewpoints of antibacterial properties, detergency and foamability. The liquid detergent composition for textile products of the present invention can contain an internal olefin sulfonate salt with 16 carbons as component (a1). Note that the carbon number of the internal olefin sulfonate salt does not include the carbon number of the salt part. In other words, the carbon number of the internal olefin sulfonate salt is the carbon number of the olefin part. That is, the carbon number of the internal olefin sulfonate salt represents the carbon number of the internal olefin which forms a covalent bond with a sulfonate salt.

Examples of a salt of the internal olefin sulfonate salt include an alkali metal salt, an alkaline earth metal (1/2 atom) salt, an ammonium salt or an organic ammonium salt. Examples of the alkali metal salt include a sodium salt and a potassium salt. Examples of the organic ammonium salt include an alkanol ammonium salt with 1 or more and 6 or less carbons.

The internal olefin sulfonate salt also includes that which contains a trace amount of so-called alfa-olefin sulfonate salt (hereinafter also referred to as an α-olefin sulfonate salt) with a sulfonate salt present at position 1 of the carbon chain. From the viewpoints of antibacterial properties, detergency and foamability, the content of the α-olefin sulfonate salt in the internal olefin sulfonate salt has an upper limit of preferably 10 mass% or less, more preferably 7 mass% or less, further preferably 5 mass% or less and furthermore preferably 3 mass% or less, and is preferably 0.01 mass% or more.

The internal olefin sulfonate salt can be obtained by sulfonating as a main component an olefin with 10 or more and 18 or less carbons with a double bond present at position 2 or higher. If the internal olefin is sulfonated, β-sultones are quantitatively produced, and part of the β-sultones changes into γ-sultones and olefin sulfonic acids, which further convert into a hydroxy alkane sulfonate salt and an olefin sulfonate salt in a neutralization/hydrolysis process (e.g., J. Am. Oil Chem. Soc. 69, 39 (1992)). Here, the resultant hydroxy alkane sulfonate salt has a hydroxy group inside the alkane chain, and the olefin sulfonate salt has a double bond inside the olefin chain. Further, the resultant product is a mixture mainly composed thereof and may partially include a hydroxy alkane sulfonate salt having a hydroxy group at the end of the carbon chain or an olefin sulfonate salt having a double bond at the end of the carbon chain in trace amounts.

Each of these products and mixtures thereof are collectively called an internal olefin sulfonate salt herein. Further, as mentioned above, the hydroxy alkane sulfonate salt and the olefin sulfonate salt are referred to as hydroxy species of the internal olefin sulfonate salt (HAS) and olefin species of the internal olefin sulfonate salt (IOS), respectively.

Note that the mass ratios of compounds in the internal olefin sulfonate salt can be measured by HPLC-MS. Specifically, the mass ratios can be determined from the HPLC-MS peak area of the internal olefin sulfonate salt, for example, by the method described later in Examples.

The internal olefin sulfonate salt may include hydroxy species and olefin species. The mass ratio of the content of the olefin species of the internal olefin sulfonate salt to the content of the hydroxy species of the internal olefin sulfonate salt in the internal olefin sulfonate salt (olefin species/hydroxy species) can be 0/100 or more and further 5/95 or more, and 50/50 or less, further 40/60 or less, further 30/70 or less and further 25/75 or less.

In the sulfate salt having an alkyl group or alkenyl group with 10 or more and 24 or less carbons, the alkyl group or alkenyl group has preferably 12 or more, and preferably 20 or less and more preferably 18 or less carbons from the viewpoints of antibacterial properties, detergency and foamability. The sulfate salt is preferably the one having an alkyl group.

In the polyoxyalkylene alkyl or alkenyl ether sulfate salt having an alkyl group or alkenyl group with 10 or more and 24 or less carbons, the alkyl group or alkenyl group has preferably 12 or more, and preferably 18 or less and more preferably 16 or less carbons from the viewpoints of antibacterial properties, detergency and foamability. The ether sulfate salt is preferably the one having an alkyl group. Examples of the oxyalkylene group of the ether sulfate salt include one or more groups selected from an oxyethylene group and an oxypropylene group. The oxyalkylene group is preferably an oxyalkylene group including an oxypropylene group and more preferably an oxypropylene group. The average number of added moles of the oxyalkylene group of the ether sulfate salt is preferably 1 or more and 5 or less.

Examples of the sulfonate salt having an alkyl group or alkenyl group with 10 or more and 24 or less carbons (provided that the internal olefin sulfonate salt with 10 or more and 18 or less carbons is excluded) include one or more anionic surfactants selected from an alkylbenzene sulfonate salt having an alkyl group with 10 or more and 24 or less carbons, an alkenylbenzene sulfonate salt having an alkenyl group with 10 or more and 24 or less carbons, an alkane sulfonate salt having an alkyl group with 10 or more and 24 or less carbons, an α-olefin sulfonate salt whose α-olefin part has 10 or more and 24 or less carbons, an α-sulfo fatty acid salt whose fatty acid part has 10 or more and 24 or less carbons, and an α-sulfo fatty acid lower alkyl ester salt whose fatty acid part has 10 or more and 24 or less carbons and ester part has 1 or more and 5 or less carbons.

Examples of a salt of component (a1) include an alkali metal salt, an alkaline earth metal (1/2 atom) salt, an ammonium salt or an organic ammonium salt. Examples of the alkali metal salt include a sodium salt and a potassium salt. Examples of the organic ammonium salt include an alkanol ammonium salt with 1 or more and 6 or less carbons. The salt of component (a1) is preferably an alkali metal salt and an alkanol ammonium salt with 1 or more and 6 or less carbons from the viewpoint of availability.

From the viewpoints of antibacterial properties, detergency and foamability, the liquid detergent composition for textile products of the present invention preferably contains the internal olefin sulfonate salt with 10 or more and 18 or less carbons as component (a) and further as component (a1).

Examples of component (a2) include alcohol alkoxylates, ester alkoxylates, polyvalent alcohol fatty acid esters that may include an alkyleneoxy group, alkyl glycosides, polyoxyethylene glycols, polyoxyethylene oxypropylene glycols, polyoxypropylene oxyethylene oxypropylene glycols and the like. Examples of the alcohol alkoxylates include a polyoxyalkylene alkyl ether, a polyoxyalkylene alkenyl ether and the like. Examples of the polyvalent alcohol fatty acid esters that may include an alkyleneoxy group include a glycerol fatty acid ester, a polyglycerol fatty acid ester, a propylene glycol fatty acid ester, a polyethylene glycol fatty acid ester, a sorbitan fatty acid ester, a sucrose fatty acid ester, a polyoxyethylene sorbitan fatty acid ester and the like.

Among them, a nonionic surfactant selected from alcohol alkoxylates and ester alkoxylates is preferable as component (a2) from the viewpoints of antibacterial properties, detergency and foamability. Examples of the alcohol alkoxylates and the ester alkoxylates include a nonionic surfactant represented by the following general formula (1):

$$R^1(CO)_mO\text{-}(AO)_n\text{-}R^2 \qquad (1)$$

wherein $R^1$ is an aliphatic hydrocarbon group with 9 or more and 18 or less carbons; $R^2$ is a hydrogen atom or a methyl group; CO is a carbonyl group; m is a number of 0 or 1; AO is one or more alkyleneoxy groups selected from an alkyleneoxy group with 2 carbons and an alkyleneoxy group with 3 carbons and includes at least an alkyleneoxy group with 2 carbons; when AO includes an alkyleneoxy group with 2 carbons and an alkyleneoxy group with 3 carbons, the alkyleneoxy group with 2 carbons and the alkyleneoxy group with 3 carbons may be bonded in blocks or bonded at random; and n represents an average number of added moles and is a number of 1 or more and 50 or less.

In the formula (1), $R^1$ has preferably 12 or more and preferably 18 or less carbons from the viewpoints of antibacterial properties, detergency and foamability.

In the formula (1), examples of the aliphatic hydrocarbon group of $R^1$ include an alkyl group and an alkenyl group.

In the formula (1), m is preferably 0 from the viewpoints of antibacterial properties, detergency and foamability.

In the formula (1), AO is one or more alkyleneoxy groups selected from an alkyleneoxy group with 2 carbons and an alkyleneoxy group with 3 carbons and includes at least an alkyleneoxy group with 2 carbons. In AO, the proportion of the alkyleneoxy group with 2 carbons, i.e., an ethyleneoxy group is preferably 50 mol% or more, more preferably 60 mol% or more and further preferably 70 mol% or more, and 100 mol% or less, or may be 100 mol% from the viewpoints of antibacterial properties, detergency and foamability.

In the formula (1), n is preferably 4 or more and more preferably 6 or more, and preferably 40 or less and more preferably 30 or less from the viewpoints of antibacterial properties, detergency and foamability.

The liquid detergent composition for textile products of the present invention preferably contains as component (a) and further as component (a2) the nonionic surfactant represented by the general formula (1).

From the viewpoints of antibacterial properties, detergency and foamability, the liquid detergent composition for textile products of the present invention preferably contains as component (a) and further as component (a2) a surfactant represented by the following general formula (2):

$$R^{11}\text{-O-}(EO)_{n1}\text{-}(AO)_{n2}\text{-}(EO)_{n3}\text{-H} \qquad (2)$$

wherein $R^{11}$ is an alkyl group or alkenyl group with 10 or more and 18 or less carbons; EO is an ethyleneoxy group; AO is an alkyleneoxy group with 3 or 4 carbons; n1, n2 and n3 are the average numbers of added moles of EO and AO; and n1 is 0 or more and 20 or less, n2 is 1 or more and 10 or less and n3 is 1 or more and 20 or less.

In the formula (2), $R^{11}$ has preferably 10 or more and preferably 15 or less carbons from the viewpoints of antibacterial properties, detergency and foamability.

n1, n2 and n3 are the average numbers of added moles of EO and AO, and n1 is preferably 1 or more, more preferably 2 or more and further preferably 3 or more, and preferably 15 or less, more preferably 12 or less and further preferably 10 or less from the viewpoints of antibacterial properties, detergency and foamability. n2 is preferably 1.5 or more and more preferably 2 or more, and preferably 10 or less and more preferably 8 or less. n3 is preferably 2 or more and more preferably 3 or more, and preferably 17 or less, more preferably 15 or less, further preferably 12 or less and furthermore preferably 10 or less.

The liquid detergent composition for textile products of the present invention preferably contains the anionic surfactant of component (a1) and the nonionic surfactant of component (a2) as component (a) from the viewpoints of antibacterial properties, detergency and foamability. In that case, the mass ratio of the content of component (a1) to the total of the contents of components (a1) and (a2), (a1)/[(a1)+(a2)], is preferably 0.05 or more, more preferably 0.2 or more, further preferably 0.3 or more and furthermore preferably 0.4 or more from the viewpoints of antibacterial properties and foamability, and preferably 0.95 or less, more preferably 0.8 or less and further preferably 0.6 or less from the viewpoints of detergency and foamability.

The liquid detergent composition for textile products of the present invention contains component (a) in an amount of preferably 20 mass% or more and more preferably 30 mass% or more, and preferably 70 mass% or less and more preferably 60 mass% or less from the viewpoints of antibacterial properties, detergency and foamability.

The liquid detergent composition for textile products of the present invention contains component (a1) in an amount of preferably 5 mass% or more, more preferably 10 mass% or more and further preferably 13 mass% or more, and preferably 40 mass% or less, more preferably 30 mass% or less and further preferably 27 mass% or less from the viewpoints of antibacterial properties, detergency and foamability.

The liquid detergent composition for textile products of the present invention contains component (a2) in an amount of preferably 5 mass% or more, more preferably 10 mass% or more and further preferably 15 mass% or more, and preferably 60 mass% or less, more preferably 55 mass% or less and further preferably 50 mass% or less from the viewpoints of antibacterial properties, detergency and foamability.

The liquid detergent composition for textile products of the present invention contains an alcohol with 10 or more and 16 or less carbons of component (b).

Component (b) is preferably a primary alcohol from the viewpoints of antibacterial properties, detergency and foamability.

Component (b) is preferably an aliphatic alcohol from the viewpoints of antibacterial properties, detergency and foamability.

Component (b) is preferably a linear alcohol from the viewpoints of antibacterial properties, detergency and foamability.

Component (b) is preferably a monovalent alcohol from the viewpoints of antibacterial properties, detergency and foamability.

Component (b) is preferably a saturated alcohol from the viewpoints of antibacterial properties, detergency and foamability.

Component (b) preferably has 12 or more and 14 or less carbons from the viewpoints of antibacterial properties, detergency and foamability.

Examples of component (b) include a decanol, a dodecanol, a tetradecanol, a hexadecanol and the like. Component (b) is preferably an alcohol selected from 1-decanol, 1-dodecanol, 1-tetradecanol and 1-hexadecanol, more preferably an alcohol selected from 1-dodecanol and 1-tetradecanol, and further preferably 1-dodecanol from the viewpoints of antibacterial properties and foamability.

The liquid detergent composition for textile products of the present invention contains component (b) in an amount of preferably 0.1 mass% or more and more preferably 0.5 mass% or more, and preferably 8 mass% or less, more preferably 6 mass% or less, further preferably 4 mass% or less and furthermore preferably 2 mass% or less from the viewpoints of antibacterial properties, detergency and foamability.

In the liquid detergent composition for textile products of the present invention, the mass ratio between the content of component (a) and the content of component (b), (b)/(a), is preferably 0.010 or more and more preferably 0.020 or more from the viewpoints of antibacterial properties and foamability, and preferably 0.1 or less, more preferably 0.075 or less, further preferably 0.06 or less and furthermore preferably 0.05 or less from the viewpoints of detergency and foamability.

The liquid detergent composition for textile products of the present invention contains an antibacterial compound having an aromatic ring (excluding quaternary ammonium salts) of component (c).

Component (c) may be, for example, a nonionic antibacterial compound having an aromatic ring.

In the context of component (c), an antibacterial compound refers to a compound for which a zone of inhibition is observed when, using cotton muslin #2003 with 1 mass% of the compound uniformly adhered thereto, an antibacterial activity test is conducted by the method of JIS L 1902 "Determination of antibacterial activity of textile products."

Examples of component (c) include an antibacterial compound having a diphenyl ether backbone, an antibacterial compound selected from phenol derivatives, an antibacterial compound selected from benzoic acid derivatives, and the like. From the viewpoints of antibacterial properties and being more likely to be fixed to textile products after washing (maintained antibacterial properties), an antibacterial compound having a diphenyl ether backbone, for example, an antibacterial compound having a diphenyl ether backbone including a halogen atom is preferable. Specific examples of the compound include diclosan, triclosan, benzoic acid, parabens and the like, and diclosan and triclosan are preferable from the viewpoints of antibacterial properties and being more likely to be fixed to textile products after washing, and further, diclosan is more preferable from the viewpoint of facilitating the product design of the liquid detergent for textile products.

The liquid detergent composition for textile products of the present invention contains component (c) in an amount of preferably 0.01 mass% or more and more preferably 0.02 mass% or more, and preferably 0.1 mass% or less and more preferably 0.07 mass% or less from the viewpoints of antibacterial properties and economy.

In the liquid detergent composition for textile products of the present invention, the mass ratio of the content of component (b) to the content of component (c), (b)/(c), is preferably 5 or more, more preferably 15 or more and further preferably 20 or more, and preferably 100 or less, more preferably 50 or less and further preferably 30 or less from the viewpoints of antibacterial properties, detergency, foamability and an antiodorizing effect for textile products.

The liquid detergent composition for textile products of the present invention can contain as components other than components (a), (b) and (c), an alkali agent, a chelating agent, a recontamination preventing agent, a dispersant, a bleaching agent, a softener, an enzyme, a fluorescent dye, an antioxidant, a pigment, an antibacterial preservative, a defoamer or the like in the range that the effects of the present invention are not impaired.

The liquid detergent composition for textile products of the present invention preferably contains water. Water is used in such an amount as makes the composition of the composition 100 mass%. The detergent composition of the present invention can contain water in an amount of, for example, 20 mass% or more and further 30 mass% or more, and 99 mass% or less, further 98 mass% or less, further 90 mass% or less and further 80 mass% or less.

The liquid detergent composition for textile products of the present invention has a pH of preferably 3 or more and more preferably 4 or more, and preferably 10 or less and more preferably 9 or less at 25°C from the viewpoints of antibacterial properties, detergency and foamability. The pH of the composition can be measured by the measuring method described later in Examples.

The liquid detergent composition for textile products of the present invention has a viscosity of preferably 10 mPa·s or more and more preferably 50 mPa·s or more, and preferably 250 mPa·s or less and more preferably 200 mPa·s or less at 20°C from the viewpoints of antibacterial properties, detergency and foamability. For example, setting the sample to 20°C and using a rotational viscometer such as a publicly-known single-cylinder viscometer or the like, the viscosity of the liquid detergent composition for textile products of the present invention can be measured.

Fibers constituting a textile product to be washed with the liquid detergent composition for textile products of the present invention may either be hydrophobic fibers or hydrophilic fibers. Examples of the hydrophobic fibers include, for example, protein fibers (milk protein casein fiber, promix and the like), polyamide fibers (nylon and the like), polyester fibers (polyester and the like), polyacrylonitrile fibers (acrylic and the like), polyvinyl alcohol fibers (vinylon and the like), polyvinyl chloride fibers (polyvinyl chloride and the like), polyvinylidene chloride fibers (vinylidene and the like), polyolefin fibers (polyethylene, polypropylene and the like), polyurethane fibers (polyurethane and the like), polyvinyl chloride/polyvinyl alcohol copolymer fibers (polychlal and the like), and others. Examples of the hydrophilic fibers include, for example, seed hair fibers (cotton, cotton, kapok and the like), bast fibers (hemp, flax, ramie, cannabis, jute and the like), vein fibers (manila hemp, sisal hemp and the like), palm fibers, juncus, straw, animal hair fibers (wool, mohair, cashmere, camel hair, alpaca, vicuna, angora and the like), silk fibers (domestic silk and wild silk), feathers, cellulose fibers (rayon, polynosic, cupro, acetate and the like), and others.

Further, examples of the textile product include woven fabrics, knitted fabrics, nonwoven fabrics and other fabrics using the above hydrophobic or hydrophilic fibers, and undershirts, T-shirts, dress shirts, blouses, slacks, caps, handkerchiefs, towels, knitwear, socks, underwear, tights and other products obtained using them.

While the effect development mechanism of the present invention has not necessarily been elucidated, it is considered to be as follows. If component (c) of the present invention, which has antibacterial properties, is used in combination with component (b), antibacterial properties against bacteria are improved. This is considered to be because when components (c) and (b) are absorbed to the inside of bacterial bodies, effects on any of the metabolic systems in the bacteria are larger compared to the case where only component (c) is absorbed thereto, and the growth of the bacterial bodies is inhibited. On the other hand, in the washing of textile products, while component (a) contributing to detergency for textile products is considered to be adsorbed to the surface of textile products after washing, the situation is difficult for low-molecular weight and highly watersoluble component (c) to adsorb to the surface of textile products. In the liquid detergent composition for textile products of the present invention, due to the combined use of component (b), a molecular association state of surfactant component (a) in an aqueous solution is changed, and good detergency and foamability are developed. Further, while relatively highly hydrophobic component (b) is considered to be easily adsorbed to the surface of textile products, it is considered that in a state where components (a) and (b) are adsorbed on the surface of fibers after washing, gaps are created in the adsorption part of component (a), and component (c) of the present invention is adsorbed thereto, resulting in accelerated adsorption of component (c) nearby component (b). This relationship among the adsorbed molecules is considered to be in further better state when components (a1) and (a2) are used together. It is considered that when bacterial bodies adhere to the surface of textile products washed with the composition of the present invention, components (b) and (c) located nearby are more likely to be taken in by the bacterial bodies, resulting in improved antibacterial properties. Note that the acting mechanism of the present invention is not particularly limited to the above.

[Method for washing textile product]

The washing method of the present invention is a method for washing a textile product including, washing the textile product with a detergent liquid obtained by mixing the liquid detergent composition for textile products of the present invention and water, and thereafter rinsing the textile product with water.

In other words, the washing method of the present invention is a method for washing a textile product including, washing the textile product with a detergent liquid obtained by mixing components (a), (b) and (c) and water, and thereafter rinsing the textile product with water.

The hardness of each of water mixed with the liquid detergent composition for textile products of the present invention and water used for rinsing can be selected from the range of 1°dH or more, further 2°dH or more and further 3°dH or more, and 30°dH or less, further 25°dH or less, further 20°dH or less, further 18°dH or less and further 15°dH or less by German hardness.

Here, German hardness (°dH) used herein refers to calcium and magnesium concentrations in water expressed in terms of $CaCO_3$ concentrations, and 1 mg/L (ppm)=about 0.056°dH (1°dH=17.8 ppm).

Calcium and magnesium concentrations for this German hardness are determined by chelate titration using an ethylenediaminetetraacetic acid disodium salt.

A specific method for measuring the German hardness of water used herein is described below.

<Method for measuring German hardness of water>

[Reagent]

- 0.01 mol/l EDTA·2Na solution: 0.01 mol/l aqueous solution of disodium ethylenediaminetetraacetate (solution for titration, 0.01 M EDTA-Na2, manufactured by Sigma-Aldrich Co. LLC (SIGMA-ALDRICH))
- Universal BT indicator (product name: Universal BT, manufactured by DOJINDO LABORATORIES)
- Ammonia buffer solution for hardness measurement (solution prepared by dissolving 67.5 g of ammonium chloride in 570 ml of 28 w/v% ammonia water and making the total amount 1000 ml with deionized water)

[Measurement of hardness]

(1) 20 ml of sample water is collected in a conical beaker with a volumetric pipette.
(2) 2 ml of ammonia buffer solution for hardness measurement is added.
(3) 0.5 ml of Universal BT indicator is added. It is confirmed that the solution after addition is reddish purple.
(4) While the conical beaker is shaken well, 0.01 mol/l EDTA·2Na solution is added dropwise from a burette, and the point of time when the sample water turns blue is taken as the end point of titration.
(5) The total hardness is determined by the following calculation formula:

$$\text{Hardness } (°dH) = T \times 0.01 \times F \times 56.0774 \times 100/A$$

T: titration amount of 0.01 mol/l EDTA·2Na solution (mL)
A: sample volume (20 mL, volume of sample water)
F: factor for 0.01 mol/l EDTA·2Na solution

The matters mentioned in the liquid detergent composition for textile products of the present invention can appropriately be applied to the washing method of the present invention.

The content of component (a) in the detergent liquid is preferably 50 mass ppm or more, more preferably 100 mass ppm or more and further preferably 125 mass ppm or more, and preferably 5000 mass ppm or less, more preferably 300 mass ppm or less, further preferably 270 mass ppm or less and furthermore preferably 250 mass ppm or less from the viewpoints of antibacterial properties, detergency and foamability.

The content of component (a1) in the detergent liquid is preferably 10 mass ppm or more and more preferably 20 mass ppm or more, and preferably 2000 mass ppm or less and more preferably 500 mass ppm or less from the viewpoints of antibacterial properties, detergency and foamability.

The content of component (a2) in the detergent liquid is preferably 10 mass ppm or more and more preferably 20 mass ppm or more, and preferably 3000 mass ppm or less and more preferably 1000 mass ppm or less from the viewpoints of antibacterial properties, detergency and foamability.

In the detergent liquid, the mass ratio of the content of component (a1) to the total of the contents of components (a1) and (a2), (a1)/[(a1)+(a2)], is preferably 0.05 or more, more preferably 0.2 or more and further preferably 0.4 or more from the viewpoints of antibacterial properties and foamability, and preferably 0.95 or less, more preferably 0.8 or less and further preferably 0.6 or less from the viewpoints of detergency and foamability.

The content of component (b) in the detergent liquid is preferably 1 mass ppm or more, more preferably 1.5 mass ppm or more and further preferably 2 mass ppm or more, and preferably 12 mass ppm or less, more preferably 10 mass ppm or less and further preferably 8 mass ppm or less from the viewpoints of detergency and foamability.

In the detergent liquid, the mass ratio between the content of component (a) and the content of component (b), (b)/(a), is preferably 0.010 or more and more preferably 0.020 or more from the viewpoints of antibacterial properties and foamability, and preferably 0.100 or less, more preferably 0.075 or less, further preferably 0.06 or less and furthermore preferably 0.05 or less from the viewpoints of detergency and foamability.

The content of component (c) in the detergent liquid is preferably 0.03 mass ppm or more, more preferably 0.05 mass ppm or more and further preferably 0.1 mass ppm or more, and preferably 1.5 mass ppm or less, more preferably 1.3 mass ppm or less and further preferably 1.0 mass ppm or less from the viewpoints of antibacterial properties and economy.

The temperature of the detergent liquid is preferably 0°C or more, more preferably 3°C or more and further preferably 5°C or more, and preferably 70°C or less and more preferably 60°C or less from the viewpoints of antibacterial properties, detergency, foamability and operability.

The pH of the detergent liquid at 20°C is preferably 3 or more and more preferably 4 or more, and preferably 10 or less and more preferably 9 or less from the viewpoints of antibacterial properties, detergency and foamability. The pH of the detergent liquid can be measured by the measuring method described later in Examples.

In recent years, as washing machines have increased in size, a bath ratio value, which is defined as the ratio between the mass of clothing (kg) and the liquid amount of a detergent liquid (liter), in other words, a value of liquid amount of detergent liquid (liter)/mass of clothing (kg) (hereinafter, this ratio may also be referred to as bath ratio), tends to be smaller. In the washing method of the present invention, the bath ratio is preferably 2 or more, more preferably 3 or more, further preferably 4 or more and furthermore preferably 5 or more, and preferably 45 or less, more preferably 40 or less, further preferably 30 or less and furthermore preferably 20 or less from the viewpoints of antibacterial properties, detergency and foamability.

In the washing method of the present invention, the washing time is preferably 1 minute or more, more preferably 2 minutes or more and further preferably 3 minutes or more, and preferably 90 minutes or less, more preferably 60 minutes or less, further preferably 30 minutes or less and furthermore preferably 15 minutes or less from the viewpoints of operability, antibacterial properties, detergency and foamability.

The method for washing fibers of the present invention is suitably applied to methods in which fibers are immersed in refining liquids while being fed by rollers or the like or rotary washing methods. Rotary washing methods mean washing methods in which fibers not fixed to a rotating device rotate around a rotation axis together with a detergent liquid. Rotary washing methods can be implemented by rotary washing machines. In the present invention, fibers are preferably washed, for example, in rotary washing machines. Specific examples of rotary washing machines include drum-type washing machines, pulsator-type washing machines or agitator-type washing machines. Each of these types of commercially available rotary washing machines can be used.

In the washing method of the present invention, a textile product is washed with a predetermined detergent liquid and thereafter rinsed with water. Rinsing may be carried out with water in conformance with a publicly-known method such as washing of clothing or the like.

The present invention discloses, in addition to the embodiments mentioned above, the following aspects.

<1> A liquid detergent composition for textile products containing (a) a surfactant [hereinafter referred to as component (a)], (b) an alcohol with 10 or more and 16 or less carbons [hereinafter referred to as component (b)] and (c) an antibacterial compound having an aromatic ring (excluding quaternary ammonium salts) [hereinafter referred to as component (c)].

<2> The liquid detergent composition for textile products according to <1>, wherein component (a) is one or more surfactants selected from (a1) an anionic surfactant and (a2) a nonionic surfactant.

<3> The liquid detergent composition for textile products according to <1> or <2>, wherein the composition contains (a1) an anionic surfactant [hereinafter referred to as component (a1)] and (a2) a nonionic surfactant [hereinafter referred to as component (a2)] as component (a).

<4> The liquid detergent composition for textile products according to <3>, wherein the mass ratio of the content of component (a1) to the total of the contents of components (a1) and (a2), (a1)/[(a1)+(a2)], is preferably 0.05 or more, more preferably 0.2 or more, further preferably 0.3 or more and furthermore preferably 0.4 or more, and preferably 0.95 or less, more preferably 0.8 or less and further preferably 0.6 or less.

<5> The liquid detergent composition for textile products according to any of <2> to <4>, wherein component (a2) is a nonionic surfactant selected from alcohol alkoxylates and ester alkoxylates.

<6> The liquid detergent composition for textile products according to any of <1> to <5>, wherein the mass ratio between the content of component (a) and the content of component (b), (b)/(a), is preferably 0.010 or more and more preferably 0.020 or more, and preferably 0.1 or less, more preferably 0.075 or less, further preferably 0.06 or less and furthermore preferably 0.05 or less.

<7> The liquid detergent composition for textile products according to any of <1> to <6>, wherein the composition contains an internal olefin sulfonate salt with 10 or more and 18 or less carbons as component (a).

<8> The liquid detergent composition for textile products according to any of <1> to <7>, wherein the composition contains as component (a) a nonionic surfactant represented by the following general formula (1) :

$$R^1(CO)_mO\text{-}(AO)_n\text{-}R^2 \qquad (1)$$

wherein $R^1$ is an aliphatic hydrocarbon group with 9 or more and 18 or less carbons; $R^2$ is a hydrogen atom or a methyl group; CO is a carbonyl group; m is a number of 0 or 1; AO is one or more alkyleneoxy groups selected from an alkyleneoxy group with 2 carbons and an alkyleneoxy group with 3 carbons and includes at least an alkyleneoxy group with 2 carbons; when AO includes an ethyleneoxy group and a propyleneoxy group, the ethyleneoxy group and the propyleneoxy group may be bonded in blocks or bonded at random; and n represents an average number of added moles and is a number of 1 or more and 50 or less.

<9> The liquid detergent composition for textile products according to any of <1> to <8>, wherein the composition contains as component (a) a surfactant represented by the following general formula (2):

$$R^{11}\text{-}LO\text{-}(EO)_{n1}\text{-}(AO)_{n2}\text{-}(EO)_{n3}\text{-}H \qquad (2)$$

wherein $R^{11}$ is an alkyl group or alkenyl group with 10 or more and 18 or less carbons; EO is an ethyleneoxy group; AO is an alkyleneoxy group with 3 or 4 carbons; n1, n2 and n3 are the average numbers of added moles of EO and AO; and n1 is 1 or more and 15 or less, n2 is 1 or more and 10 or less and n3 is 1 or more and 15 or less.

<10> The liquid detergent composition for textile products according to any of <1> to <9>, wherein component (b) is an alcohol selected from a decanol, a dodecanol, a tetradecanol and a hexadecanol, preferably an alcohol selected from 1-decanol, 1-dodecanol, 1-tetradecanol and 1-hexadecanol, more preferably an alcohol selected from 1-dodecanol and 1-tetradecanol, and further preferably 1-dodecanol.

<11> The liquid detergent composition for textile products according to any of <1> to <10>, wherein component (c) is a nonionic antibacterial compound having an aromatic ring.

<12> The liquid detergent composition for textile products according to any of <1> to <11>, wherein component (c) is an antibacterial compound having a diphenyl ether backbone.

<13> The liquid detergent composition for textile products according to any of <1> to <12>, wherein the composition contains component (c) in an amount of preferably 0.01 mass% or more and more preferably 0.02 mass% or more, and preferably 0.1 mass% or less and more preferably 0.07 mass% or less.

<14> A method for washing a textile product including, washing the textile product with a detergent liquid obtained by mixing the liquid detergent composition for textile products according to any of <1> to <13> and water, and thereafter rinsing the textile product with water.

<15> The method for washing a textile product according to <14>, wherein each of water mixed with the liquid detergent composition for textile products and water used for rinsing has a hardness selected from 1°dH or more, further 2°dH or more and further 3°dH or more, and 30°dH or less, further 25°dH or less, further 20°dH or less, further 18°dH or less and further 15°dH or less by German hardness.

<16> The method for washing a textile product according to <15>, wherein the German hardness is hardness by the following measuring method,

<Method for measuring German hardness of water>

[Reagent]

- 0.01 mol/l EDTA·2Na solution: 0.01 mol/l aqueous solution of disodium ethylenediaminetetraacetate (solution for titration, 0.01 M EDTA-Na2, manufactured by Sigma-Aldrich Co. LLC (SIGMA-ALDRICH))
- Universal BT indicator (product name: Universal BT, manufactured by DOJINDO LABORATORIES)
- Ammonia buffer solution for hardness measurement (solution prepared by dissolving 67.5 g of ammonium chloride in 570 ml of 28 w/v% ammonia water and making the total amount 1000 ml with deionized water)

[Measurement of hardness]

(1) 20 ml of sample water is collected in a conical beaker with a volumetric pipette;
(2) 2 ml of ammonia buffer solution for hardness measurement is added;
(3) 0.5 ml of Universal BT indicator is added, and it is confirmed that the solution after addition is reddish purple;
(4) While the conical beaker is shaken well, 0.01 mol/l EDTA·2Na solution is added dropwise from a burette, and the point of time when the sample water turns blue is taken as the end point of titration; and
(5) the total hardness is determined by the following calculation formula:

$$\mathrm{Hardness~(^{\circ}dH)} = T \times 0.01 \times F \times 56.0774 \times 100/A$$

T: titration amount of 0.01 mol/l EDTA·2Na solution (mL)
A: sample volume (20 mL, volume of sample water)
F: factor for 0.01 mol/l EDTA·2Na solution.

<17> The method for washing a textile product according to any of <14> to <16>, wherein the content of component (a) in the detergent liquid is preferably 50 mass ppm or more, more preferably 100 mass ppm or more and further preferably 125 mass ppm or more, and preferably 5000 mass ppm or less, more preferably 300 mass ppm or less, further preferably 270 mass ppm or less and furthermore preferably 250 mass ppm or less.

<18> The method for washing a textile product according to any of <14> to <17>, wherein the content of component (a1) in the detergent liquid is preferably 10 mass ppm or more and more preferably 20 mass ppm or more, and preferably 2000 mass ppm or less and more preferably 500 mass ppm or less.

<19> The method for washing a textile product according to any of <14> to <18>, wherein the content of component (a2) in the detergent liquid is preferably 10 mass ppm or more and more preferably 20 mass ppm or more, and preferably 3000 mass ppm or less and more preferably 1000 mass ppm or less.

<20> The method for washing a textile product according to any of <14> to <19>, wherein the content of component (b) in the detergent liquid is preferably 1 mass ppm or more, more preferably 1.5 mass ppm or more and further preferably 2 mass ppm or more, and preferably 12 mass ppm or less, more preferably 10 mass ppm or less and further preferably 8 mass ppm or less.

<21> The method for washing a textile product according to any of <14> to <20>, wherein the content of component (c) in the detergent liquid is preferably 0.03 mass ppm or more, more preferably 0.05 mass ppm or more and further preferably 0.1 mass ppm or more, and preferably 1.5 mass ppm or less, more preferably 1.3 mass ppm or less and further preferably 1.0 mass ppm or less.

Examples

The following are the components used in the examples and comparative examples.

<Formulation component>

Component (a)

Component (a1)

(a1-1): internal olefin sulfonate potassium salt with 16 carbons

Using an internal olefin with 16 carbons and referring to methods described in production examples of JP-A 2014-76988, (a1-1) was obtained. In the resultant internal olefin sulfonate potassium salt of (a1-1), the mass ratio of olefin species (potassium olefin sulfonates)/hydroxy species (potassium hydroxy alkane sulfonates) is 17/83. Mass proportions in a distribution for the position of a sulfonic acid group of the hydroxy species in (a1-1) were as follows: position 1/position 2/position 3/position 4/position 5/positions 6-9=2.3%/23.6%/18.9%/17.5%/13.7%/11.2%/6.4%/6.4%/0% (100 mass% in total).

The mass proportions in the distribution for the position of a sulfonic acid group in the internal olefin sulfonate salt were measured by high-performance liquid chromatography/mass spectrometry (HPLC-MS). Specifically, the hydroxy species in which a sulfonic acid group was bonded were separated by high-performance liquid chromatography (HPLC), and each of them was identified by mass spectrometry (MS). As a result, the proportion of each of them was determined from the HPLC-MS peak area thereof. Each proportion determined from the peak area was calculated as a mass proportion herein.

Note that the following were the devices and conditions used for measurement: HPLC device "LC-20ASXR" (manufactured by SHIMADZU CORPORATION); column "ODS Hypersil®" (4.6×250 mm, particle size: 3 μm, manufactured by Thermo Fisher Scientific K.K.); sample preparation (1000-fold dilution with methanol); eluent A (10 mM ammonium acetate-added water); eluent B (10 mM ammonium acetate-added methacrylonitrile/water=95/5 (v/v) solution); gradient (0 minutes (A/B=60/40)→15.1 to 20 minutes (30/70)→20.1 to 30 minutes (60/40)); MS device "LCMS-2020" (manufactured by SHIMADZU CORPORATION); ESI detection (anion detection, m/z: 321.10 (component (a) with 16 carbons)); column temperature (40°C); flow rate (0.5 mL/min); and injection volume (5 μL).

The mass ratio of hydroxy species/olefin species of the internal olefin sulfonate salt was measured by HPLC-MS. Specifically, the hydroxy species and olefin species were separated by HPLC, and each of them was identified by MS. As a result, the proportion of each of them was determined from the HPLC-MS peak area thereof.

Note that the following were the devices and conditions used for measurement: HPLC device (product name: Agilent Technology 1100, manufactured by Agilent Technologies); column (product name: L-column ODS 4.6x150 mm, manufactured by Chemicals Evaluation and Research Institute, Japan); sample preparation (1000-fold dilution with methanol); eluent A (10 mM ammonium acetate-added water); eluent B (10 mM ammonium acetate-added methanol); gradient (0 minutes (A/B=30/70%)→10 minutes (30/70%)→55 minutes (0/100%)→65 minutes (0/100%)→66 minutes (30/70%)→75 minutes (30/70%)); MS device (product name: Agilent Technology 1100MS SL (G1946D)); and MS detection (anion detection, m/z: 60-1600, UV 240 nm).

Further, a prescribed amount of α-olefin sulfonate salt having an aliphatic hydrocarbon group with 16 carbons was added to component (a1-1) as the external standard, and the peak area of the α-olefin sulfonate salt was compared with that of component (a1-1) to calculate the mass of component (a1-1). The number of moles of component (a1-1) was calculated from the molecular weight of component (a1-1). The molecular weight of component (a1-1) was calculated in terms of that of the acid form. The molecular weights of the olefin species and HAS species of the internal olefin sulfonate salt are 304.5 and 322.6, respectively.

(a1-2): lauryl benzenesulfonate

Component (a2)

(a2-1): polyoxyethylene lauryl ether (the average number of added moles of the oxyethylene group is 10 mol)
(a2-2): polyoxyethylene·polyoxypropylene·polyoxyethylene lauryl ether (the average numbers of added moles of the oxyethylene groups are 9 mol and 9 mol, and the average number of added moles of the oxypropylene group is 2 mol)

Component (b): 1-dodecanol (manufactured by Kao Corporation, KALCOL 2098)

Component (c): diclosan

(1) Method for measuring pH

A composite electrode for pH measurement (manufactured by HORIBA, Ltd., glass slide-in sleeve type) is connected to a pH meter (pH/ion meter F-23 manufactured by HORIBA, Ltd.), and the power is turned on. A saturated potassium chloride aqueous solution (3.33 mol/L) is used as an internal solution of the pH electrode. Next, 100-mL beakers are filled respectively with a pH 4.01 standard solution (phthalate standard solution), a pH 6.86 standard solution (neutral phosphate standard solution) and a pH 9.18 standard solution (borate standard solution), and immersed in a constant temperature bath at 25°C for 30 minutes. The electrode for pH measurement is immersed in the standard solutions adjusted to a constant temperature for 3 minutes such that a calibration operation is performed in the order of pH 6.86→pH 9.18→pH 4.01. A sample to be measured (liquid detergent composition for textile products) is adjusted to 25°C, the electrode of the pH meter is immersed in the sample, and the pH is measured 1 minute later.

(2) Preparation of liquid detergent composition for textile products

The liquid detergent compositions for textile products shown in Tables 1 and 2 were each prepared in the following manner.
A Teflon® stirrer piece with a length of 5 cm was placed in a glass beaker with a capacity of 200 mL and the mass thereof was measured. Next, the glass beaker was charged with 20 g of ion exchange water and components (a1), (a2), (b) and (c), and while they were stirred at 100 r/min, monoethanolamine or hydrochloric acid was added to make the pH of the composition 8 and ion exchange water was added to make the total amount 100 g. After they were stirred at 100 r/min for 15 minutes, the resultant product was used as the liquid detergent composition for textile products.

(3) Preparation of textile product for washing rate evaluation

(3-1) Preparation of textile product for diclosan adsorption rate evaluation

1.7 kg of cotton fabric (cotton 2003 (manufactured by Tanigashira Shoten)) was washed in the standard course of a fully automatic washing machine (manufactured by Panasonic Corporation, NA-F702P) (adding 4.7 g of EMULGEN 108 (manufactured by Kao Corporation) when washing and using water in an amount of 47 L, washed for 9 minutes, rinsed twice, and dewatered for 3 minutes) twice in a cumulative manner, thereafter washed with water alone (using water in an amount of 47 L, washed for 9 minutes, rinsed twice, and dewatered for 3 minutes) three times in a cumulative manner, and dried for 24 hours under an environment at 23°C and 45%RH. After that, the fabric was cut into pieces with a size of 6 cm×6 cm.

(3-2) Preparation of textile product for washing rate evaluation

• Preparation of model artificial sebum-soiled fabric

A model artificial sebum soiling liquid of the composition below was adhered to fabric (cotton 2003 (manufactured by Tanigashira Shoten)) to prepare model artificial sebum-soiled fabric. The adhesion of the model artificial sebum soiling liquid to the fabric was carried out by printing the artificial soiling liquid on the fabric with a gravure roll coater. The step of adhering the model artificial sebum soiling liquid to the fabric to prepare the model artificial sebum-soiled fabric was carried out under the following conditions: cell capacity of the gravure roll 58 cm$^3$/m$^2$; coating rate 1.0 m/min; drying temperature 100°C; and drying time 1 min. After that, the fabric was cut into pieces with a size of 6 cm×6 cm.

*Composition of model artificial sebum soiling liquid:

lauric acid 0.4 mass%; myristic acid 3.1 mass%; pentadecanoic acid 2.3 mass%; palmitic acid 6.2 mass%; heptadecanoic acid 0.4 mass%; stearic acid 1.6 mass%; oleic acid 7.8 mass%; triolein 13.0 mass%; n-hexadecyl palmitate 2.2 mass%; squalene 6.5 mass%; egg white lecithin liquid crystal 1.9 mass%; Kanuma red-clay 8.1 mass%; carbon black 0.01 mass%; and water of the balance (100 mass% in total)

(4) Washing test

(4-1) Washing test 1

Using a tergotometer (manufactured by Ueshima Seisakusho Co., Ltd.), a washing operation was performed. Water used for washing was washing water obtained by adding calcium chloride and magnesium chloride to ion exchange water in proportions of 8:2 by mass ratio and adjusting the hardness to 4°dH. Each of the liquid detergent compositions for textile products listed in Tables 1 and 2 was mixed with the washing water such that the total amount of components (a1) and (a2) in the composition was 150 mg/kg in terms of the concentration in the detergent liquid to obtain the detergent liquid. 0.6 L of the detergent liquid and four pieces of the above textile product for diclosan adsorption rate evaluation were placed in a 1-liter stainless beaker for washing tests. The bath ratio was adjusted to 20 with the above textile product for adsorption rate evaluation. The temperature of the detergent liquid was 20°C. The fibers for evaluation were washed in the tergotometer at 85 rpm for 10 minutes. After washing, dewatering was carried out, and all the fibers dewatered were placed in 0.6 L of the washing water to carry out rinsing in the tergotometer at 85 rpm for 3 minutes. After rinsed, they were dewatered again and thereafter dried under an environment at 23°C and 45%RH for 24 hours.

(4-2) Washing test 2

Using a tergotometer (manufactured by Ueshima Seisakusho Co., Ltd.), a washing operation was performed. Water used for washing was washing water obtained by adding calcium chloride and magnesium chloride to ion exchange water in proportions of 8:2 by mass ratio and adjusting the hardness to 4°dH. Each of the liquid detergent compositions for textile products listed in Tables 1 and 2 was mixed with the washing water such that the total amount of components (a1) and (a2) in the composition was 150 mg/kg in terms of the concentration in the detergent liquid to obtain the detergent liquid. 0.6 L of the detergent liquid and five pieces of the above textile product for washing rate evaluation were placed in a 1-liter stainless beaker for washing tests. The bath ratio was adjusted to 20 with the above textile product for diclosan adsorption rate evaluation. The temperature of the detergent liquid was 20°C. The fibers for evaluation were washed in the tergotometer at 85 rpm for 10 minutes. After washed, they were dewatered and dried with an ironing press machine.

(5) Quantification of adsorption amount of diclosan to textile product (evaluation of antibacterial properties)

As an indicator for antibacterial properties, the adsorption amount of the antibacterial agent to the textile product was used. The larger the adsorption amount of the antibacterial agents is, the higher antibacterial properties are and the better the antibacterial properties of the textile product after washing are maintained.

Two pieces were taken out from the above textile product for diclosan adsorption rate evaluation subjected to washing test 1, and the mass of the fabric pieces was measured while they were sealed in a screw tube bottle No. 7. 20 mL of methanol was added thereto and ultrasonic treatment was performed in an ultrasonic cleaner at 25°C for 30 minutes to obtain a solution for measurement. Next, component (c) (diclosan) was diluted with methanol to prepare calibration-curve solutions of 0.01 $\mu$g/mL, 0.05 $\mu$g/mL, 0.1 $\mu$g/mL, 0.5 $\mu$g/mL and 1.0 $\mu$g/mL. The amount of diclosan in the solution for measurement was quantified by a liquid chromatograph mass spectrometer (hereinafter abbreviated as LCMS device), and the diclosan adsorption amount to the textile product was determined from the calibration-curve solutions.

- LCMS device: LCMS2020 manufactured by SHIMADZU CORPORATION
- Eluent A: an aqueous solution of 10 mmol/L ammonium acetate in distilled water
- Eluent B: a methanol solution of 10 mmol/L ammonium acetate
- Gradient conditions: eluent A/B=1:1 (0 minutes)→eluent B (2 to 5 minutes)→eluent A/eluent B=1:1 (5.1-8 minutes), flow rate: 0.6 mL/min, sample injection volume 5 $\mu$l, column temperature 40°C

The diclosan adsorption rate to the textile product was determined by the formula below. The results are shown in Tables 1 and 2.

Diclosan adsorption rate=100×{(total mass of diclosan adsorbed to two pieces of textile product used to measure adsorption amount)×(total mass of textile product used in washing test 1)/(mass of two pieces of textile product used to measure adsorption amount)}/(total mass of diclosan used to prepare detergent liquid)

(6) Method for evaluating washing rate

The washing rate of the above textile product for evaluation obtained in washing test 2 was measured by the method below, and the average value of five pieces was determined. The results are shown in Tables 1 and 2.

The reflectance at 550 nm of the original fabric before soiling and before and after washing was measured with a colorimeter (manufactured by NIPPON DENSHOKU INDUSTRIES CO., LTD., Z-300A) to determine the washing rate (%) by the following formula. Note that the values in Tables 1 and 2 are average values of the washing rates of five pieces.

```
Washing rate (%)=100×[(reflectance after washing-

reflectance before washing)/(reflectance of original

fabric-reflectance before washing)]
```

(7) Foaming test

Water used for the foaming test was foaming test water obtained by adding calcium chloride and magnesium chloride to ion exchange water in proportions of 8:2 by mass ratio and adjusting the hardness to 4°dH. Each of the liquid detergent compositions for textile products listed in Tables 1 and 2 was mixed with the foaming test water such that the total amount of components (a1) and (a2) in the composition was 600 mg/kg in terms of the concentration in the detergent liquid to obtain a foaming test liquid. 50 g of the foaming test liquid was put into a screw tube bottle No. 8. The screw tube bottle containing the foaming test liquid was shaken vertically in a reciprocating manner at 300 rpm for 5 minutes in a shaker (Yamato Scientific Co., Ltd., model number: SA300). After shaken, the screw tube bottle was removed from the shaker and left to stand for 30 minutes, and then, the height from the water surface of the foaming test liquid to the surface of the foam was measured and defined as foam height. Foam with a foam height of 3.5 cm or more was taken as "Good," and that with a foam height of less than 3.5 cm was taken as "Poor."

[Table 1]

| | | | | Example | | | | | | | | | | | | Comparative example | | |
|---|---|---|---|---|---|---|---|---|---|---|---|---|---|---|---|---|---|---|
| Liquid detergent composition for textile products | | | | I-1 | I-2 | I-3 | I-4 | I-5 | I-6 | I-7 | I-8 | I-9 | I-10 | I-11 | I-12 | I-1 | I-2 | I-3 |
| Formulation amount (mass%) | (a) | (a1) | (a1-1) | 36 | 27 | 18 | 13.5 | 36 | 27 | 18 | 13.5 | 9 | 9 | 45 | 0 | 36 | 36 | 0 |
| | | (a2) | (a2-1) | 9 | 18 | 27 | 31.5 | 0 | 0 | 0 | 0 | 36 | 0 | 0 | 45 | 9 | 0 | 0 |
| | | | (a2-2) | 0 | 0 | 0 | 0 | 9 | 18 | 27 | 31.5 | 0 | 36 | 0 | 0 | 0 | 9 | 0 |
| | (b) 1-dodecanol | | | 1 | 1 | 1 | 1 | 1 | 1 | 1 | 1 | 1 | 1 | 1 | 1 | 0 | 0 | 1 |
| | (c) Diclosan | | | 0.045 | 0.045 | 0.045 | 0.045 | 0.045 | 0.045 | 0.045 | 0.045 | 0.045 | 0.045 | 0.045 | 0.045 | 0.045 | 0.045 | 0.045 |
| | Ion exchange water | | | Balance | Balance | Balance | Balance | Balance | Balance | Balance | Balance | Balance | Balance | Balance | Balance | Balance | Balance | Balance |
| | Total | | | 100 | 100 | 100 | 100 | 100 | 100 | 100 | 100 | 100 | 100 | 100 | 100 | 100 | 100 | 100 |
| (a1)/[(a1)+(a2)] (mass ratio) | | | | 0.80 | 0.60 | 0.40 | 0.30 | 0.80 | 0.60 | 0.40 | 0.30 | 0.2 | 0.2 | 1.0 | 0.0 | 0.8 | 0.8 | — |
| (b)/(a) (mass ratio) | | | | 0.022 | 0.022 | 0.022 | 0.022 | 0.022 | 0.022 | 0.022 | 0.022 | 0.022 | 0.022 | 0.022 | 0.022 | 0.000 | 0.000 | — |
| Diclosan adsorption rate [%] | | | | 23.9 | 22.7 | 21.9 | 20.1 | 27.8 | 26.1 | 26.7 | 25.8 | 13.5 | 14.8 | 28.9 | 13.2 | 22.8 | 28.0 | 17.0 |
| Washing rate [%] | | | | 34.0 | 35.9 | 38.5 | 38.3 | 35.1 | 36.1 | 36.8 | 37.5 | 39.1 | 39.5 | 22.5 | 42.6 | 33.0 | 34.5 | 1.0 |
| Foaming | | | | Good | Good | Good | Good | Good | Good | Good | Good | Good | Good | Good | Good | Poor | Poor | Poor |

[Table 2]

| | | | | Example | | | | | | | | | | | | | Comparative example |
|---|---|---|---|---|---|---|---|---|---|---|---|---|---|---|---|---|---|
| | | | | 2-1 | 2-2 | 2-3 | 2-4 | 2-5 | 2-6 | 2-7 | 2-8 | 2-9 | 2-10 | 2-11 | 2-12 | 2-13 | 2-1 |
| Liquid detergent composition for textile products | Formulation amount (mass%) | (a) | (a1) (a1-2) | 36 | 27 | 18 | 13.5 | 36 | 27 | 18 | 13.5 | 9 | 9 | 45 | 27 | 27 | 13.5 |
| | | | (a2) (a2-1) | 9 | 18 | 27 | 31.5 | 0 | 0 | 0 | 0 | 36 | 0 | 0 | 18 | 18 | 31.5 |
| | | | (a2-2) | 0 | 0 | 0 | 0 | 9 | 18 | 27 | 31.5 | 0 | 36 | 0 | 0 | 0 | 0 |
| | | (b) | 1-dodecanol | 1 | 1 | 1 | 1 | 1 | 1 | 1 | 1 | 1 | 1 | 1 | 1.5 | 3 | 0 |
| | | (c) | Diclosan | 0.045 | 0.045 | 0.045 | 0.045 | 0.045 | 0.045 | 0.045 | 0.045 | 0.045 | 0.045 | 0.045 | 0.045 | 0.045 | 0.045 |
| | | Ion exchange water | | Balance | Balance | Balance | Balance | Balance | Balance | Balance | Balance | Balance | Balance | Balance | Balance | Balance | Balance |
| | | Total | | 100 | 100 | 100 | 100 | 100 | 100 | 100 | 100 | 100 | 100 | 100 | 100 | 100 | 100 |
| | (a1)/[(a1)+(a2)] (mass ratio) | | | 0.80 | 0.60 | 0.40 | 0.30 | 0.80 | 0.60 | 0.40 | 0.30 | 0.2 | 0.2 | 1.0 | 0.6 | 0.6 | 0.3 |
| | (b)/(a) (mass ratio) | | | 0.022 | 0.022 | 0.022 | 0.022 | 0.022 | 0.022 | 0.022 | 0.022 | 0.022 | 0.022 | 0.022 | 0.033 | 0.067 | 0.000 |
| Diclosan adsorption rate [%] | | | | 18.3 | 17.0 | 15.7 | 15.2 | 18.7 | 17.9 | 17.0 | 16.8 | 14.5 | 14.2 | 19.5 | 17.1 | 17.4 | 14.0 |
| Washing rate [%] | | | | 28.8 | 33.7 | 37.4 | 37.8 | 30.9 | 32.7 | 33.1 | 36.7 | 40.1 | 37.6 | 20.4 | 33.5 | 32.5 | 38.0 |
| Foaming | | | | Good | Good | Good | Good | Good | Good | Good | Good | Good | Good | Good | Good | Good | Poor |

**Claims**

1. A liquid detergent composition for textile products comprising (a) a surfactant [hereinafter referred to as component (a)], (b) an alcohol with 10 or more and 16 or less carbons [hereinafter referred to as component (b)] and (c) an antibacterial compound having an aromatic ring (excluding quaternary ammonium salts) [hereinafter referred to as component (c)].

2. The liquid detergent composition for textile products according to claim 1, wherein the component (a) is one or more surfactants selected from (a1) an anionic surfactant and (a2) a nonionic surfactant.

3. The liquid detergent composition for textile products according to claim 1 or 2, wherein the composition comprises (a1) an anionic surfactant [hereinafter referred to as component (a1)] and (a2) a nonionic surfactant [hereinafter referred to as component (a2)] as the component (a).

4. The liquid detergent composition for textile products according to claim 3, wherein a mass ratio of a content of the component (a1) to a total of contents of the components (a1) and (a2), (a1)/[(a1)+(a2)], is 0.05 or more and 0.95 or less.

5. The liquid detergent composition for textile products according to any one of claims 1 to 4, wherein a mass ratio between a content of the component (a) and a content of the component (b), (b)/(a), is 0.010 or more and 0.1 or less.

6. The liquid detergent composition for textile products according to any one of claims 1 to 5, wherein the composition comprises an internal olefin sulfonate salt with 10 or more and 18 or less carbons as the component (a).

7. The liquid detergent composition for textile products according to any one of claims 1 to 6, wherein the composition comprises as the component (a) a nonionic surfactant represented by the following general formula (1) :

$$R^1(CO)_mO\text{-}(AO)_n\text{-}R^2 \qquad (1)$$

wherein $R^1$ is an aliphatic hydrocarbon group with 9 or more and 18 or less carbons; $R^2$ is a hydrogen atom or a methyl group; CO is a carbonyl group; m is a number of 0 or 1; AO is one or more alkyleneoxy groups selected from an alkyleneoxy group with 2 carbons and an alkyleneoxy group with 3 carbons and includes at least an alkyleneoxy group with 2 carbons; when AO includes an ethyleneoxy group and a propyleneoxy group, the ethyleneoxy group and the propyleneoxy group may be bonded in blocks or bonded at random; and n represents an average number of added moles and is a number of 1 or more and 50 or less.

8. The liquid detergent composition for textile products according to any one of claims 1 to 7, wherein the component (c) is a nonionic antibacterial compound having an aromatic ring.

9. The liquid detergent composition for textile products according to any one of claims 1 to 8, wherein the component (c) is an antibacterial compound having a diphenyl ether backbone.

10. A method for washing a textile product comprising, washing the textile product with a detergent liquid obtained by mixing the liquid detergent composition for textile products according to any one of claims 1 to 9 and water, and thereafter rinsing the textile product with water.

**INTERNATIONAL SEARCH REPORT**

| International application No. |
| --- |
| PCT/JP2020/043613 |

**A. CLASSIFICATION OF SUBJECT MATTER**
C11D 17/08(2006.01)i; D06F 35/00(2006.01)i; C11D 1/14(2006.01)i; C11D 1/68(2006.01)i; C11D 1/74(2006.01)i; C11D 1/83(2006.01)i; C11D 3/20(2006.01)i; C11D 3/48(2006.01)i; D06L 1/12(2006.01)i
FI:     C11Dl7/08; C11D3/48; C11D1/83; C11D1/14; C11D1/74; C11D1/68; D06L1/12; D06F35/00 Z; C11D3/20
According to International Patent Classification (IPC) or to both national classification and IPC

**B. FIELDS SEARCHED**

Minimum documentation searched (classification system followed by classification symbols)
C11D17/08; D06F35/00; C11D1/14; C11D1/68; C11D1/74; C11D1/83; C11D3/20; C11D3/48; D06l1/12

Documentation searched other than minimum documentation to the extent that such documents are included in the fields searched
Published examined utility model applications of Japan        1922–1996
Published unexamined utility model applications of Japan      1971–2021
Registered utility model specifications of Japan              1996–2021
Published registered utility model applications of Japan      1994–2021

Electronic data base consulted during the international search (name of data base and, where practicable, search terms used)
JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2011-190368 A (LION CORP.) 29 September 2011 (2011-09-29) claims, paragraphs [0057]-[0108], table 10, example 3, etc. | 1-5, 7-10<br>6 |
| X<br><br>Y<br>A | JP 2017-525861 A (THE PROCTER & GAMBLE COMPANY) 07 September 2017 (2017-09-07) claims, paragraphs [0112]-[0132], examples, etc. | 1-2, 5, 7-8, 10<br>9<br>3-4, 6 |
| X<br>Y | JP 2017-521504 A (THE PROCTER & GAMBLE COMPANY) 03 August 2017 (2017-08-03) claims, paragraphs [0055], [0070]-[0086], examples, etc. | 1-5, 7-10<br>1-2, 5-6, 7-10 |

☒ Further documents are listed in the continuation of Box C.    ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 08 January 2021 (08.01.2021) | 19 January 2021 (19.01.2021) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

**INTERNATIONAL SEARCH REPORT**

International application No.

PCT/JP2020/043613

C (Continuation). DOCUMENTS CONSIDERED TO BE RELEVANT

| Category* | Citation of document, with indication, where appropriate, of the relevant passages | Relevant to claim No. |
|---|---|---|
| X | JP 2019-73688 A (THE PROCTER & GAMBLE COMPANY) 16 May 2019 (2019-05-16) claims, paragraphs [0056], [0070]-[0083], examples, etc. | 1-5, 7-10 |
| Y | | 1-2, 5-6, 7-10 |
| X | JP 2017-518934 A (THE PROCTER & GAMBLE COMPANY) 13 July 2017 (2017-07-13) claims, paragraphs [0043], [0077]-[0101], examples, etc. | 1-5, 7-10 |
| Y | | 1-2, 5-6, 7-10 |
| Y | JP 2007-177130 A (LION CORP.) 12 July 2007 (2007-07-12) claims, paragraphs [0060]-[0086], examples 4, 8, 18, etc. | 1-2, 5, 7-10 |
| A | | 3-4, 6 |
| Y | WO 2017/209120 A1 (KAO CORP.) 07 December 2017 (2017-12-07) paragraphs [0002]-[0006] | 6 |
| A | JP 2017-514968 A (THE PROCTER & GAMBLE COMPANY) 08 June 2017 (2017-06-08) claims, examples, etc. | 1-10 |
| A | WO 2017/051776 A1 (LION CORP.) 30 March 2017 (2017-03-30) claims, examples, etc. | 1-10 |
| A | JP 2018-203923 A (LION CORP.) 27 December 2018 (2018-12-27) claims, examples, etc. | 1-10 |

Form PCT/ISA/210 (continuation of second sheet) (January 2015)

## INTERNATIONAL SEARCH REPORT
Information on patent family members

International application No.

PCT/JP2020/043613

| Patent Documents referred in the Report | Publication Date | Patent Family | Publication Date |
|---|---|---|---|
| JP 2011-190368 A | 29 Sep. 2011 | (Family: none) | |
| JP 2017-525861 A | 07 Sep. 2017 | US 2016/0024435 A1 claims, paragraphs [0163]-[0175], examples, etc. WO 2016/018900 A1 EP 3174968 A1 CN 106661514 A | |
| JP 2017-521564 A | 03 Aug. 2017 | US 2016/0060582 A1 claims, paragraphs [0070], [0103]-[0120], examples, etc. WO 2015/172678 A1 EP 3143112 A1 CN 106232790 A | |
| JP 2019-73688 A | 16 May 2019 | WO 2019/071500 A1 claims, page 12, lines 12-25, pp. 17-22, examples, etc. CN 109652230 A | |
| JP 2017-518934 A | 13 Jul. 2017 | US 2015/0376556 A1 claims, paragraphs [0053], [0102]-[0128], examples, etc. WO 2016/000128 A1 CN 106459854 A | |
| JP 2007-177130 A | 12 Jul. 2007 | (Family: none) | |
| WO 2017/209120 A1 | 07 Dec. 2017 | EP 3467083 A1 paragraphs [0002]-[0006] CN 109196082 A | |
| JP 2017-514968 A | 08 Jun. 2017 | US 2015/0322386 A1 claims, examples, etc. WO 2015/172282 A1 EP 3143113 A1 CN 106232789 A | |
| WO 2017/051776 A1 | 30 Mar. 2017 | (Family: none) | |
| JP 2018-203923 A | 27 Dec. 2018 | (Family: none) | |

Form PCT/ISA/210 (patent family annex) (January 2015)

**REFERENCES CITED IN THE DESCRIPTION**

**Patent documents cited in the description**

- JP 2009263812 A
- JP 2004204085 A
- JP 2011190368 A
- JP 2014076988 A

**Non-patent literature cited in the description**

- *J. Am. Oil Chem. Soc.,* 1992, vol. 69, 39